# EUROPEAN PATENT APPLICATION

(11) **EP 4 676 111 A1**
(43) Date of publication of application: **07.01.2026**
(21) Application number: 24869974.6
(22) Date of filing: 09.07.2024
(51) Int. Cl.: H04W 24/02

(54) **PROCESSING METHOD AND APPARATUS FOR WIRELESS NETWORK COVERAGE VULNERABILITY, AND COMPUTING DEVICE**

(30) Priority: 25.09.2023 CN 202311243121
(71) Applicant: Ruijie Networks Co., Ltd., Fuzhou, Fujian 350002 (CN)
(72) Inventor: CHEN, Junpeng, Fuzhou, Fujian 350002 (CN)
(74) Representative: Boult Wade Tennant LLP
(86) International application number: PCT/CN2024/104564
(87) International publication number: WO 2025/066418

(57) **Abstract**

This application provides a wireless network coverage vulnerability processing method and apparatus, and a computing device. The method includes: obtaining weak fingerprint data, acquired by a wireless access point AP within a preset time period, of a terminal within a coverage area, where the weak fingerprint data of the terminal is signal data of the AP that is acquired by the terminal in the case of a weak signal; determining a suspected coverage vulnerability based on weak fingerprint data of each terminal; determining, based on the suspected coverage vulnerability, whether the suspected coverage vulnerability meets a filter-out condition; and when the suspected coverage vulnerability meets the filter-out condition, determining that the suspected coverage vulnerability is not a wireless network coverage vulnerability.

## Description

### CROSS-REFERENCE TO RELATED APPLICATIONS

This application claims priority to Chinese Patent Application No. 202311243121.4, filed with the China National Intellectual Property Administration on September 25, 2023 and entitled "WIRELESS NETWORK COVERAGE VULNERABILITY PROCESSING METHOD AND APPARATUS, AND COMPUTING DEVICE", which is incorporated herein by reference in its entirety.

### TECHNICAL FIELD

This application relates to the field of communication technologies, and in particular, to a wireless network coverage vulnerability processing method and apparatus, a computing device, and a storage medium.

### BACKGROUND

In modem society, people increasingly rely on a wireless network. Stability and a transmission speed of the wireless network directly affect people's quality of life and work efficiency. However, due to various reasons, wireless network coverage vulnerabilities still exist. A wireless network coverage vulnerability means that wireless network signal strength is insufficient in a specific area, leading to a failure to provide a normal wireless network service.

### SUMMARY

Embodiments of this application provide a wireless network coverage vulnerability processing method.

According to a first aspect, an embodiment of this application provides a wireless network coverage vulnerability processing method, including: obtaining weak fingerprint data, acquired by a wireless access point (AP), of a terminal within a coverage area, where the weak fingerprint data of the terminal is signal data of the AP that is acquired by the terminal in the case of a weak signal; determining a suspected coverage vulnerability based on the weak fingerprint data of the terminal; determining, based on the suspected coverage vulnerability, whether the suspected coverage vulnerability meets a filter-out condition; and when the suspected coverage vulnerability meets the filter-out condition, determining that the suspected coverage vulnerability is not a wireless network coverage vulnerability.

In the foregoing implementation, signal data of each AP, namely, weak fingerprint data of terminals, that is acquired within a coverage area in the case of a weak signal is obtained, a suspected coverage vulnerability is determined based on the weak fingerprint data, and whether the suspected coverage vulnerability meets the filter-out condition is determined, to eliminate misjudgment of a wireless network coverage vulnerability due to the filter-out condition. Compared with a current implementation, the suspected coverage vulnerability is considered in time and space, and a factor that is likely to cause misjudgment of the suspected coverage vulnerability is considered. This effectively ensures comprehensiveness and accuracy of a coverage area of a coverage vulnerability.

In a possible implementation, before the obtaining weak fingerprint data, acquired by a wireless access point AP within a preset time period, of a terminal within a coverage area, the method further includes:
when uplink signal strength of a first terminal is less than a preset threshold, triggering a first AP to acquire weak fingerprint data of the first terminal, where the first AP is a device in a network accessed by the first terminal.

In a possible implementation, the filter-out condition is used to indicate, in a time dimension and/or a space dimension, that the suspected coverage vulnerability is not a wireless network coverage vulnerability.

In a possible implementation, the method further includes: obtaining weak fingerprint data, acquired by a wireless access point AP, of the terminal within a coverage area, where weak fingerprint data of any terminal is signal data of the AP that is acquired by the terminal in the case of a weak signal; and determining a suspected coverage vulnerability based on the weak fingerprint data of the terminal and a problematic AP, where the problematic AP is an AP with signal strength lower than a threshold among APs that are associated with terminals and that are obtained through a cloud; and
for each suspected coverage vulnerability, determining whether the suspected coverage vulnerability meets a filter-out condition, and if the suspected coverage vulnerability meets the filter-out condition, determining that the suspected coverage vulnerability is not a wireless network coverage vulnerability.

In the foregoing implementation, signal data of each AP, namely, weak fingerprint data of terminals, that is acquired within a coverage area in the case of a weak signal is obtained, a suspected coverage vulnerability is determined based on the weak fingerprint data and an AP obtained through the cloud, and then whether the suspected coverage vulnerability meets the filter-out condition is determined, to determine whether the suspected coverage vulnerability is not a wireless network coverage vulnerability. To be specific, during determining of the suspected coverage vulnerability, the suspected coverage vulnerability is determined based on both the weak fingerprint data and a connected problematic AP, and is more accurate.

In a possible implementation, the filter-out condition includes: acquisition times corresponding to a first coverage vulnerability in at least two acquisition cycles belong to one time range, and/or an AP corresponding to the first coverage vulnerability is an edge AP, where the first coverage vulnerability is any suspected coverage vulnerability.

In the foregoing implementation, the filter-out condition includes two aspects. One is an influencing factor in time, that is, a tidal phenomenon is determined. To be specific, it is determined that a coverage vulnerability corresponding to acquisition times that are in at least two acquisition cycles and that belong to one time range, in other words, appearing at times that belong to one time range, is a tidal phenomenon, and is a factor that causes misjudgment of a wireless network vulnerability. The other is an influencing factor in space. To be specific, whether an AP corresponding to a coverage vulnerability is an edge AP is determined. If yes, the suspected coverage vulnerability is not a wireless network coverage vulnerability. In other words, if the suspected coverage vulnerability meets the filter-out condition, the suspected coverage vulnerability is not a wireless network coverage vulnerability. A cause that can affect misjudgment is considered, so that a wireless network coverage vulnerability can be effectively dealt with, to improve accuracy of dealing with the wireless network coverage vulnerability.

In a possible implementation, the determining whether the suspected coverage vulnerability meets a filter-out condition includes: determining suspected coverage vulnerabilities corresponding to different times based on weak fingerprint data, acquired at different times, of terminals within a coverage area of each AP; and if a difference between acquisition times corresponding to any suspected coverage vulnerability in at least two acquisition cycles is less than a preset time difference threshold, the suspected coverage vulnerability meets the filter-out condition.

In the foregoing implementation, weak fingerprint data of terminals within a coverage area of each AP at different times is obtained, and suspected coverage vulnerabilities corresponding to different time periods are determined based on the obtained weak fingerprint data of terminals. To be specific, if a difference between at least two acquisition times corresponding to a suspected coverage vulnerability is greater than the preset time difference threshold, the suspected coverage vulnerability meets the filter-out condition, and is a normal tidal phenomenon, to be specific, a phenomenon in which the terminal is in a weak signal state due to similar causes, for example, a suspected coverage vulnerability is caused by a large quantity of users using a network the way like that during morning peak hours. In this way, misjudgment is avoided, and accuracy of coverage vulnerability processing is improved.

In a possible implementation, the determining whether the suspected coverage vulnerability meets a filter-out condition includes: if it is determined that the first AP corresponding to the suspected coverage vulnerability is an edge AP, the suspected coverage vulnerability meets the filter-out condition.

It can be learned from the foregoing implementation that, when the first AP corresponding to the suspected coverage vulnerability is an edge AP, the filter-out condition is met, to be specific, appearance of the suspected coverage vulnerability is misjudgment that occurs because a connected AP is an edge AP. In this way, accuracy of determining a wireless network vulnerability is improved.

In a possible implementation, if acquisition times corresponding to the suspected coverage vulnerability in at least two acquisition cycles do not belong to one time range, whether the first AP corresponding to the suspected coverage vulnerability is an edge AP is determined; and if the first AP corresponding to the suspected coverage vulnerability is an edge AP, it is determined that the suspected coverage vulnerability meets the filter-out condition. Alternatively, if the first AP corresponding to the suspected coverage vulnerability is not an edge AP, whether acquisition times corresponding to the suspected coverage vulnerability in at least two acquisition cycles belong to one time range is determined; and if the acquisition times corresponding to the suspected coverage vulnerability in the at least two acquisition cycles belong to one time range, it is determined that the suspected coverage vulnerability meets the filter-out condition.

It can be learned from the foregoing implementation that, when the acquisition times corresponding to the suspected coverage vulnerability in the at least two acquisition cycles belong to one time range, the filter-out condition is met; or when a problematic AP corresponding to the suspected coverage vulnerability is an edge AP, the suspected coverage vulnerability meets the filter-out condition. That is, provided that one of the judgment conditions is met, the filter-out condition is met. On the contrary, if the acquisition times corresponding to the suspected coverage vulnerability in the at least two acquisition cycles do not belong to one time range, whether an AP corresponding to the suspected coverage vulnerability is an edge AP is further determined; and if the AP is not an edge AP, the suspected coverage vulnerability does not meet the filter-out condition. That is, the suspected coverage vulnerability neither belongs to an edge AP nor belongs to one time range.

In a possible implementation, the determining whether an AP corresponding to the suspected coverage vulnerability meets a filter-out condition includes: determining respective node features of the first AP corresponding to the suspected coverage vulnerability and a second AP, where a node feature of any AP is used to indicate a wireless network status of the AP, and the second AP includes at least one AP other than the first AP; determining an inter-node feature between the first AP corresponding to the suspected coverage vulnerability and the second AP, where the inter-node feature is used to indicate a correlation between AP nodes based on terminal roaming data; and determining, based on the inter-node feature and the respective node features of the first AP and the second AP, that the first AP is an edge AP.

In a possible implementation, the determining, based on the inter-node feature and the respective node features of the first AP and the second AP, that the first AP is an edge AP includes: constructing AP graph structure data based on the inter-node feature and the respective node features of the first AP and the second AP; and determining, based on the AP graph structure data, that the first AP is an edge AP.

In the foregoing implementation, whether an AP is an edge AP is mainly determined based on a node feature of a corresponding AP and an inter-node feature between the AP and another AP. First, node features of APs that indicate a wireless network status of the AP are determined. Then an inter-node feature between a corresponding AP and another AP is determined based on a correlation between AP nodes based on terminal roaming data, AP graph structure data is constructed based on the node features of the APs and the inter-node feature between the AP and the another AP, and an edge AP among the APs is determined based on the AP graph structure data. That is, in the foregoing manner, a phenomenon that affects judgment of a coverage vulnerability in a space dimension is eliminated, so that accuracy of coverage vulnerability processing is improved.

In a possible implementation, the determining, based on the inter-node feature and a node feature of the first AP, that the AP corresponding to the suspected coverage vulnerability is an edge AP includes:
determining an attention coefficient between the first AP and the second AP based on the inter-node feature between the first AP and the second AP, the node feature of the first AP, and a node feature of the second AP; determining a fusion node feature of the first AP based on an attention coefficient between adjacent APs; and determining, based on the fusion node feature, that the first AP is an edge AP.

In the foregoing implementation, for an AP graph structure, an attention coefficient between a corresponding AP and another AP is determined based on node features of APs and an inter-node feature between nodes. This is more helpful for acquiring an interaction relationship between AP nodes. After the attention coefficient is obtained, a fusion node feature of the AP is determined based on the attention coefficient. To be specific, an original feature of the AP node is updated to a new feature of the AP node, namely, the fusion node feature of the AP. Finally, it is determined, based on the fusion node feature of the AP, that the AP corresponding to the suspected coverage vulnerability is an edge AP. This avoids misjudgment of a coverage vulnerability due to a weak signal introduced by the edge AP, and improves accuracy of coverage vulnerability processing.

In a possible implementation, the determining an edge AP among the APs based on the AP graph structure data includes: inputting the AP graph structure data to a graph structure model, to obtain a node feature vector of the AP; and inputting the node feature vector of the AP to a classification model, to determine that the first AP is an edge AP.

In the foregoing implementation, during determining the edge AP among the APs based on the AP graph structure data, the edge AP is obtained based on the graph structure model and the classification model. To be specific, the AP graph structure data is first input to the graph structure model to obtain node feature vectors of the APs, and then the node feature vectors of the APs are input to the classification model to determine that an AP corresponding to the suspected coverage vulnerability among the APs is an edge AP. The edge AP is determined by using the model. Because parameters in the model are obtained through training, the finally obtained edge AP is more accurate.

In a possible implementation, the node feature includes one or more of AP mutual-scan data, or roaming data and go-online/offline data of terminals within the coverage area of the AP; and the inter-node feature is a quantity of times of inter-node terminal roaming and/or a terminal roaming direction.

In the foregoing implementation, the node feature of the AP is determined based on the AP mutual-scan data, or the roaming data and the go-online/offline data of terminals within the coverage area of the AP; and the inter-node feature between APs is determined based on the quantity of times of inter-node terminal roaming and/or the terminal roaming direction. The node feature and the inter-node feature are determined based on the foregoing data, so that a real feature relationship of the AP is obtained more effectively, and subsequent calculation for determining a coverage vulnerability is more accurate.

In a possible implementation, when the coverage area of the AP includes a plurality of terminals, determining a suspected coverage vulnerability based on weak fingerprint data of the plurality of terminals includes: clustering the weak fingerprint data of the plurality of terminals based on a density parameter, to obtain one or more first clusters and at least one first outlier, where the first outlier is weak fingerprint data that does not belong to any first cluster; clustering a plurality of first clusters and first outliers based on an adjusted density parameter, to obtain one or more second clusters and at least one second outlier, until a clustering stop condition is met, where the second outlier is weak fingerprint data that does not belong to any second cluster; and determining, as a suspected coverage vulnerability, each cluster obtained when the clustering stop condition is met, where the density parameter includes a cluster region size and a minimum quantity of points in the cluster, clustering is performed based on a cosine distance between the weak fingerprint data, and the adjusted density parameter is a cluster region size and a minimum quantity of points in the cluster that are redefined based on the plurality of first clusters and the plurality of first outliers.

In the foregoing implementation, the suspected coverage vulnerability is determined by using a method of clustering the weak fingerprint data of the terminals based on the density parameter. To be specific, the weak fingerprint data of the terminals is clustered based on the density parameter determined based on the cluster region size and the minimum quantity of points in the cluster to obtain first clusters and first outliers; then clustering is performed again based on the adjusted density parameter to determine whether second clusters and second outliers obtained through clustering meet the clustering stop condition; and if the clustering stop condition is not met, clustering continues to be performed; or if the clustering stop condition is met, each cluster obtained when the clustering stop condition is met is determined as a suspected coverage vulnerability. In this way, a coverage vulnerability area can be efficiently and accurately dealt with, with high accuracy and a low false positive rate. Clustering is performed based on the cosine distance between the weak fingerprint data, and therefore has higher robustness.

In a possible implementation, the clustering stop condition is determined based on comparison between outliers in at least two clustering results; and if quantities of outliers are equal, the clustering stop condition is met; or otherwise, clustering continues to be performed.

In the foregoing implementation, whether clustering is to be stopped, that is, the stop condition, is determined based on outliers in calculation results of at least two clustering results, and a final cluster is determined based on the stop condition, to obtain a suspected coverage vulnerability. This improves accuracy of determining a suspected coverage vulnerability, and reduces a probability of misjudgment.

In a possible implementation, after the determining that the suspected coverage vulnerability meets the filter-out condition, the method further includes: determining whether a quantity of terminals meets a threshold; and if the threshold is met, finally determining that the suspected coverage vulnerability is a wireless network coverage vulnerability.

In the foregoing implementation, before whether the suspected coverage vulnerability is a wireless network coverage vulnerability is finally determined, the quantity of terminals in the suspected coverage vulnerability in this case needs to be further determined; and if the quantity meets the threshold, the suspected coverage vulnerability is a wireless network coverage vulnerability. This can effectively avoid misjudgment of a wireless network coverage vulnerability caused by the terminals, and ensure accuracy of determining a wireless network coverage vulnerability.

In a possible implementation, in the case of a weak signal, AP signal strength sensed by the terminal is less than a preset threshold.

In a possible implementation, after the determining whether the suspected coverage vulnerability meets a filter-out condition, the method further includes:
when the suspected coverage vulnerability does not meet the filter-out condition, determining that the suspected coverage vulnerability is a wireless network coverage vulnerability.

According to a second aspect, an embodiment of this application provides a wireless network coverage vulnerability processing apparatus, including:
an obtaining unit, configured to obtain weak fingerprint data, acquired by a wireless access point AP, of a terminal within a coverage area, where the weak fingerprint data of the terminal is signal data of the AP that is acquired by the terminal in the case of a weak signal; and
a determining unit, configured to determine a suspected coverage vulnerability based on the weak fingerprint data of the terminal, where
the determining unit is further configured to: based on the suspected coverage vulnerability, determine whether the suspected coverage vulnerability meets a filter-out condition; and if the suspected coverage vulnerability meets the filter-out condition, determine that the suspected coverage vulnerability is not a wireless network coverage vulnerability.

In a possible implementation, the obtaining unit is further configured to: obtain weak fingerprint data, acquired by a wireless access point AP, of the terminal within a coverage area, where weak fingerprint data of any terminal is signal data of the AP that is acquired by the terminal in the case of a weak signal; and determine a suspected coverage vulnerability based on the weak fingerprint data of the terminal and a problematic AP, where the problematic AP is an AP with signal strength lower than a threshold among APs that are associated with the terminal and that are obtained based on a cloud; and
the determining unit is further configured to: for each suspected coverage vulnerability, determine whether the suspected coverage vulnerability meets a filter-out condition, and if the suspected coverage vulnerability meets the filter-out condition, determine that the suspected coverage vulnerability is not a wireless network coverage vulnerability.

In a possible implementation, the filter-out condition includes: acquisition times corresponding to a first coverage vulnerability in at least two acquisition cycles belong to one time range, and/or an AP corresponding to the first coverage vulnerability is an edge AP, where the first coverage vulnerability is any suspected coverage vulnerability.

In a possible implementation, the determining unit is configured to determine suspected coverage vulnerabilities corresponding to different times based on weak fingerprint data, acquired at different times, of terminals within a coverage area of each AP; and
the determining unit is configured to: if a difference between acquisition times corresponding to any suspected coverage vulnerability in at least two acquisition cycles is less than a preset time difference threshold, determine that the suspected coverage vulnerability meets the filter-out condition.

In a possible implementation, the determining unit is further configured to: if it is determined that the first AP corresponding to the suspected coverage vulnerability is an edge AP, determine that the suspected coverage vulnerability meets the filter-out condition.

In a possible implementation, the determining unit is configured to: if acquisition times corresponding to the suspected coverage vulnerability in at least two acquisition cycles do not belong to one time range, determine whether the first AP is an edge AP, and if the first AP is an edge AP, determine that the suspected coverage vulnerability meets the filter-out condition; or if the first AP is not an edge AP, determine whether acquisition times corresponding to the suspected coverage vulnerability in at least two acquisition cycles belong to one time range, and if the acquisition times corresponding to the suspected coverage vulnerability in the at least two acquisition cycles belong to one time range, determine that the suspected coverage vulnerability meets the filter-out condition;
the determining unit is configured to determine respective node features of the first AP and a second AP, where a node feature of any AP is used to indicate a wireless network status of the AP, and the second AP includes at least one AP other than the first AP;
the determining unit is configured to determine an inter-node feature between the first AP corresponding to the suspected coverage vulnerability and the second AP, where the inter-node feature is used to indicate a correlation between AP nodes based on terminal roaming data; and
the determining unit is configured to determine, based on the inter-node feature and the respective node features of the first AP and the second AP, that the first AP is an edge AP.

In a possible implementation, the determining unit is configured to construct AP graph structure data based on the inter-node feature and the respective node features of the first AP and the second AP, and determine, based on the AP graph structure data, that the first AP is an edge AP.

In a possible implementation, the determining unit is configured to determine an attention coefficient between the first AP and the second AP based on the inter-node feature between the first AP and the second AP, the node feature of the first AP, and a node feature of the second AP, and determine a fusion node feature of the first AP based on an attention coefficient between adjacent APs; and
the determining unit is configured to determine, based on the fusion node feature, that the first AP is an edge AP.

In a possible implementation, the determining unit is further configured to input the AP graph structure data to a graph structure model, to obtain a node feature vector of the AP; and
the determining unit is further configured to input the node feature vector of the AP to a classification model, to determine that the first AP is an edge AP.

In a possible implementation, the node feature includes one or more of AP mutual-scan data, or roaming data and go-online/offline data of terminals within the coverage area of the AP; and
the inter-node feature is a quantity of times of inter-node terminal roaming and/or a terminal roaming direction.

In a possible implementation, when the coverage area of the AP includes a plurality of terminals, the determining unit is configured to cluster the weak fingerprint data of the plurality of terminals based on a density parameter, to obtain one or more first clusters and at least one first outlier, where the first outlier is weak fingerprint data that does not belong to any first cluster;
the determining unit is configured to cluster a plurality of first clusters and first outliers based on an adjusted density parameter, to obtain one or more second clusters and at least one second outlier, until a clustering stop condition is met, where the second outlier is weak fingerprint data that does not belong to any second cluster; and
the determining unit is configured to determine, as a suspected coverage vulnerability, each cluster obtained when the clustering stop condition is met, where the density parameter includes a cluster region size and a minimum quantity of points in the cluster, clustering is performed based on a cosine distance between the weak fingerprint data, and the adjusted density parameter is a cluster region size and a minimum quantity of points in the cluster that are redefined based on the plurality of first clusters and the plurality of first outliers.

In a possible implementation, the determining unit is configured to determine the clustering stop condition based on comparison between outliers in at least two clustering results; and if quantities of outliers are equal, determine that the clustering stop condition is met; or otherwise, continue to perform clustering.

In a possible implementation, the determining unit is further configured to determine that a quantity of terminals meets a threshold; and if the threshold is met, finally determine that the suspected coverage vulnerability is a wireless network coverage vulnerability.

According to a third aspect, this application further provides a computing device, including:
a memory, configured to store program instructions; and
a processor, configured to invoke the program instructions stored in the memory, and perform, based on an obtained program, the wireless network coverage vulnerability processing method.

According to a fourth aspect, this application further provides a computer-readable non-volatile storage medium, including computer-readable instructions. When a computer reads and executes the computer-readable instructions, the computer is enabled to perform the wireless network coverage vulnerability processing method.

For technical effects that can be achieved in any one of the second aspect to the fourth aspect, refer to the descriptions of the beneficial effects in the first aspect. Details are not repeated herein again.

### BRIEF DESCRIPTION OF DRAWINGS

To describe the technical solutions in the embodiments of this application more clearly, the following briefly describes the accompanying drawings required for describing the embodiments. Apparently, the accompanying drawings in the following description show merely some embodiments of this application, and a person of ordinary skill in the art may still derive other drawings from these accompanying drawings without creative efforts.
FIG. 1 is a framework diagram of a wireless network coverage vulnerability processing system according to an embodiment of this application;
FIG. 2 is a schematic flowchart of a wireless network coverage vulnerability processing method according to an embodiment of this application;
FIG. 3 is a flowchart of triggering obtaining of weak fingerprint data according to an embodiment of this application;
FIG. 4 is a schematic flowchart of a method for determining a suspected coverage vulnerability according to an embodiment of this application;
FIG. 5 is a schematic diagram of an AP graph structure according to an embodiment of this application;
FIG. 6 is a schematic diagram of determining an edge AP among APs according to an embodiment of this application;
FIG. 7 is a schematic diagram of an overall process of determining a coverage vulnerability according to an embodiment of this application;
FIG. 8 is a schematic diagram of a wireless network coverage vulnerability processing apparatus according to an embodiment of this application; and
FIG. 9 shows a computing device according to an embodiment of this application.

### DESCRIPTION OF EMBODIMENTS

To make the objectives, technical solutions, and advantages of the embodiments of this application clearer, the following clearly and thoroughly describes the technical solutions of this application with reference to the accompanying drawings in the embodiments of this application. Apparently, the described embodiments are some but not all of the embodiments of this application. All other embodiments obtained by a person of ordinary skill in the art based on the embodiments described in this application document without creative efforts shall fall within the protection scope of the technical solutions of this application.

In the specification, claims, and accompanying drawings of this application, the terms "first" and "second" are used to distinguish between different objects, and not intended to describe a specific order. In addition, the term "include" and any other variant thereof are intended to cover non-exclusive protection. For example, a process, method, system, product, or device that includes a list of steps or units is not limited to the listed steps or units, but optionally includes steps or units not listed, or optionally includes other steps or units inherent to the process, method, product, or device. The term "a plurality of" in this application may mean at least two, for example, two, three, or more. However, the embodiments of this application are not limited thereto.

In addition, the term "and/or" in this specification describes only an association relationship for describing associated objects and represents that three relationships may exist. For example, A and/or B may represent the following three cases: Only A exists, both A and B exist, and only B exists. In addition, unless otherwise specified, the character "/" in this specification usually indicates an "or" relationship between associated objects.

With development of society, a wireless network has become an indispensable part of people's daily life and work. Support from the wireless network is required in online learning, telecommuting, social media, and online entertainment. However, due to various reasons, wireless network coverage vulnerabilities still exist in many places. This not only affects people's experience of using the network, but also may affect some important network services, such as telemedicine and online education. A wireless network coverage vulnerability is a case in which wireless network signal strength is insufficient for ensuring normal communication in a specific area, leading to a failure to normally use a wireless network service. This case may lead to a low network connection speed, unreliable data transmission, or even a failure to connect to the network. A current processing method is usually as follows: obtaining signal strength of a client (namely, a terminal) through an AP device, determining a suspected coverage vulnerability based on a preset signal strength threshold and signal strengths corresponding to each AP location and client, determining a quantity of clients at a location corresponding to the suspected coverage vulnerability, and determining a coverage vulnerability based on a determining result. However, in this process of coverage vulnerability processing, a coverage vulnerability determined due to misjudgment, for example, in the case of a tidal phenomenon or an edge AP, is not considered. The tidal phenomenon means that a demand of users to use a wireless network increases during morning peak hours, leading to a low network speed. During the peak hours getting off the work, a mobile phone may still be kept associated with an AP at a company or home when a user leaves a workplace, leading to a continuously weak signal. Such weak signal events are not caused by a coverage vulnerability, but are caused by user behaviors. Therefore, lack of analysis on tidal effects leads to misjudgment of a coverage vulnerability.

The edge AP is a wireless access point located at an edge of a network coverage area. The edge AP is usually an outermost peripheral device or a device far away from a core AP in the network, for example, is at a location near an edge of a building wall, or a building entrance/exit, or in a parking area. When a user has left a work or living area but is near a building wall, for example at an edge location of network coverage, such as a parking area, an entrance/exit, or a home entrance, the user may be still connected to the edge AP. This also causes a weak signal event, leading to misjudgment of a coverage vulnerability.

For the problem that inaccuracy of coverage vulnerability processing inevitably exists, the embodiments of this application provide a wireless network coverage vulnerability processing method, to improve accuracy of coverage vulnerability processing.

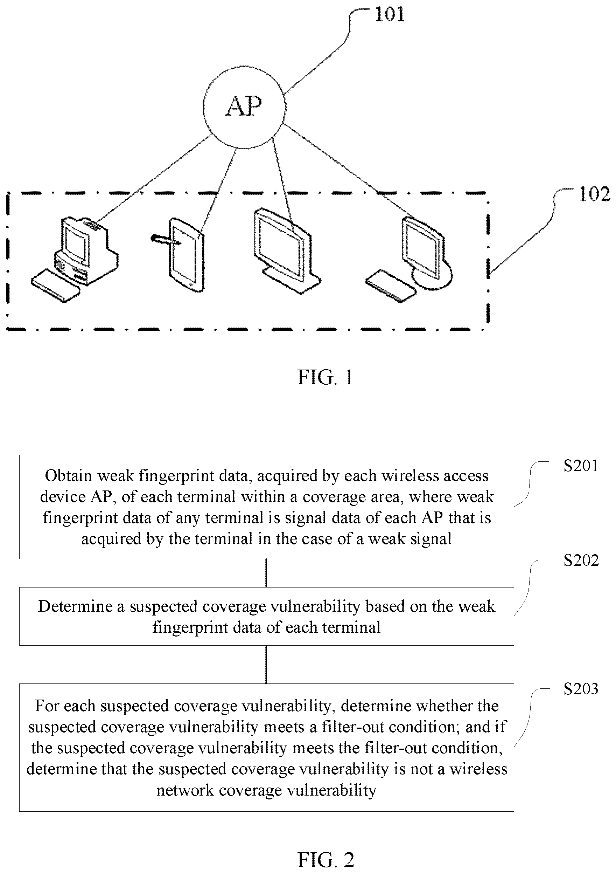

FIG. 1 is a framework diagram of a wireless network coverage vulnerability processing system according to an embodiment of this application. The system includes a device AP 101 and a terminal 102. The device AP 101 is equipped with an AP, namely, an AP node, configured to provide a network for the terminal 102 to implement interaction. The terminal 102 is configured to implement a network service after being connected to the AP node. The terminal may be a terminal device such as a mobile phone, a smart wearable device, a tablet computer, or a notebook computer. FIG. 1 shows only one device AP as an example, and a quantity is not uniquely limited. The device AP 101 and the terminal 102 are connected wirelessly, or may be connected in other manners. This is not specifically limited herein.

The embodiments of this application further disclose a wireless network coverage vulnerability processing method. FIG. 2 is a schematic flowchart of a wireless network coverage vulnerability processing method according to an embodiment of this application. The method includes the following steps.

Step 201: Obtain weak fingerprint data, acquired by each wireless access point AP, of terminals within a coverage area, where weak fingerprint data of any terminal is signal data of each AP that is acquired by the terminal in the case of a weak signal.

To ensure that no coverage vulnerability exists within a wireless network coverage area, a coverage vulnerability needs to be dealt with. However, when the coverage vulnerability is being dealt with, signal strength of an AP within the wireless network coverage area further needs to be determined. Therefore, weak fingerprint data, acquired by each wireless access point AP, of terminals within a coverage area, namely, signal data of each AP that is acquired by the terminal in the case of a weak signal, needs to be obtained. The weak signal is referred to that if signal strengths of APs that are sensed by the terminal is less than a threshold, it is considered that the terminal is in the case of a weak signal. The threshold may be an empirical value that is set according to an actual requirement. For example, if sensed signal strength of an AP is less than -40 dBm, it can be considered that the terminal is in the case of a weak signal.

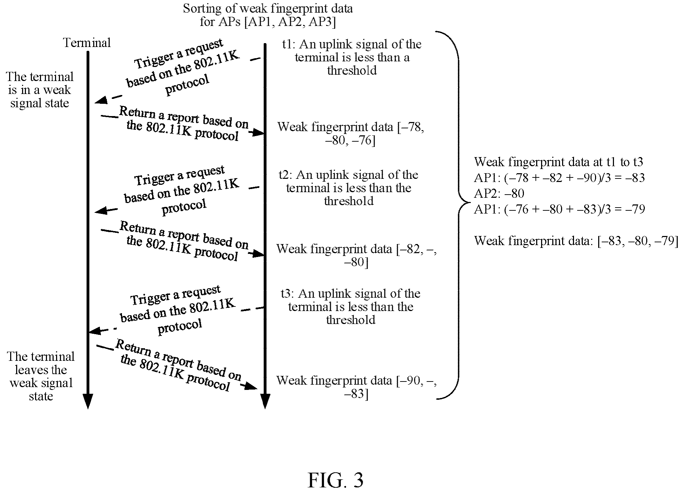

FIG. 3 is a flowchart of triggering obtaining of weak fingerprint data according to an embodiment of this application. To be specific, a wireless access point AP finds that an uplink signal of a terminal is less than a threshold that is set according to an actual requirement, and sends a request signal to the terminal based on the 802.1 protocol; and after receiving the request signal, the terminal returns a downlink signal of each AP on the terminal side to the wireless access point AP in a form of a report. During this process, due to signal fluctuation, it is necessary to send a request signal and obtain a reply in a form of a report for several times, to obtain weak fingerprint data of terminals.

In an example, it is assumed that there are three APs in this scenario. Certainly, a quantity of wireless access points APs in a network environment provided in this application is not limited, and there may be a plurality of APs. In this embodiment, three APs are used as an example: an AP1, an AP2, and an AP3. When it is detected that an uplink signal of the terminal is less than the threshold at a time t1, the 802.11K protocol is triggered to send a request signal, and the terminal returns a report based on the 802.11K protocol, to obtain weak signal data at t1: AP1: -78; AP2: -80; AP3: -76. The values (-78, -80, -76) represent signal strength. Similarly, interaction is still performed at different times t2 and t3, to obtain weak signal data at t2: AP1: -82; AP2: -; AP3: -80, and obtain weak signal data at t3: AP1: -90; AP2: -; AP3: -83. The weak signal data is superposed in chronological order to obtain final weak fingerprint data: AP1: -83; AP2: -80; AP3: -79.

It should be noted that the foregoing superposition is performed through summation and averaging, and superposition may alternatively be performed in another manner, for example, weighted summation and averaging. This is not uniquely limited herein. The foregoing order is the chronological order, and other orders may alternatively be used. This is not uniquely limited herein.

S202: Determine a suspected coverage vulnerability based on the weak fingerprint data of terminals.

After the weak fingerprint data of terminals is determined in step S201, the suspected coverage vulnerability is determined based on the weak fingerprint data of terminals. The suspected coverage vulnerability indicates a possibility of preliminarily determining that a coverage vulnerability exists.

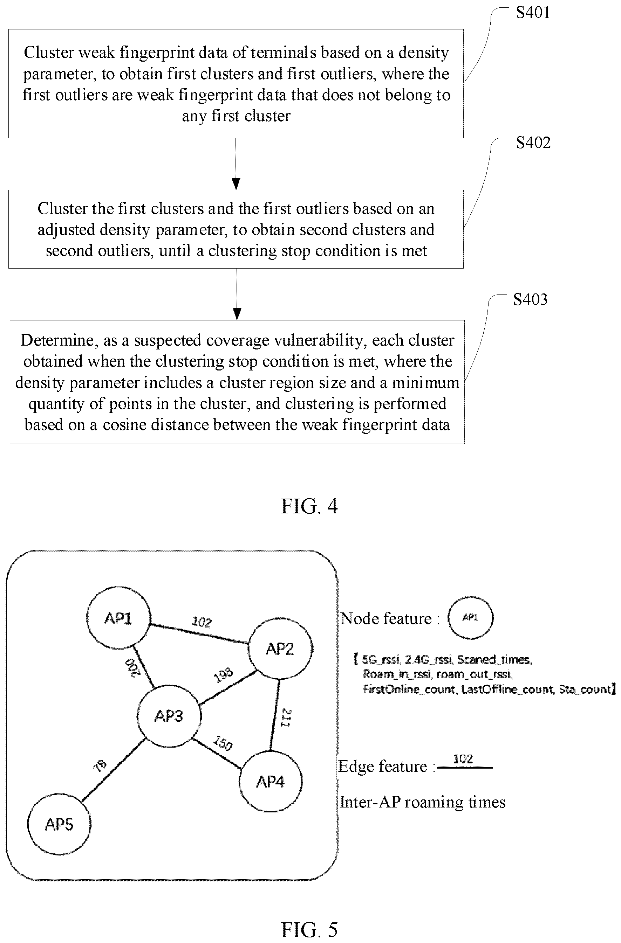

In another embodiment, FIG. 4 is a schematic flowchart of a method for determining a suspected coverage vulnerability according to an embodiment of this application. The method includes the following steps.

S401: Cluster weak fingerprint data of terminals based on a density parameter, to obtain first clusters and first outliers, where the first outliers are weak fingerprint data that does not belong to any first cluster.

The clustering means clustering and merging adjacent similar classification regions by using a morphological operator. The cluster is a name of a region after the clustering and merging. In this embodiment of this application, the fingerprint data of the terminals is clustered based on the density parameter, to obtain the first clusters and the first outliers of the weak fingerprint data that do not belong to any first cluster.

In an example, it is assumed that there are 100 pieces of weak fingerprint data, and the 100 pieces of weak fingerprint data are clustered to obtain 15 clusters and 25 first outliers.

S402: Cluster the first clusters and the first outliers based on an adjusted density parameter, to obtain second clusters and second outliers, until a clustering stop condition is met.

After the first clusters and the first outliers are obtained through the first clustering, clustering needs to be performed again. A reason is as follows: After the first clustering is performed, determining needs to be performed based on the clustering stop condition, and the clustering stop condition requires comparison between at least two clustering results. Therefore, after the first clusters and the first outliers are obtained, clustering is performed again based on the adjustment of the density parameter, to obtain the second clusters and the second outliers; the second outliers are compared with the first outliers; and if there is no change, the clustering stop condition is met; or if the clustering stop condition is not met, clustering continues to be performed until the clustering stop condition is met.

Still refer to the foregoing example. Average feature processing is performed on the 15 clusters obtained through the first clustering, to obtain first average clusters; and the first average clusters and the first outliers are clustered based on the adjusted density parameter, to obtain 13 clusters and 25 second outliers after the clustering. In this case, a quantity of the first outliers is equal to a quantity of the second outliers, and the clustering stop condition is met.

S403: Determine, as a suspected coverage vulnerability, each cluster obtained when the clustering stop condition is met, where the density parameter includes a cluster region size and a minimum quantity of points in the cluster, and clustering is performed based on a cosine distance between the weak fingerprint data.

In another embodiment, each cluster obtained when the clustering stop condition is met in S402 is determined as a suspected coverage vulnerability. The density parameter is determined based on the cluster region size ε and the minimum quantity of points MinPts in the cluster, and settings of initial values are determined based on an actual scenario. To be specific, the cluster region size ε is manually set to an empirical value based on a distribution status of weak fingerprint data on a timeline, and the minimum quantity of points MinPts in the cluster is set to an empirical value. The adjusted density parameter is an empirical value that is reset based on the density parameter and a distribution status of the first clusters and the first outliers on a timeline. This may also be understood as an optimization process. That is, an initial value of the density parameter is set based on constant updates of clusters and outliers. To be specific, the cluster region size ε and the minimum quantity of points MinPts in the cluster based on which the weak fingerprint data is obtained are set according to an actual requirement. To be specific, a principle of clustering is to use the cluster region size ε as a division range, and a cluster may be formed when the division range reaches a value of the minimum quantity of points MinPts in the cluster. It should be noted that the cluster region size ε as the division range is determined based on a cosine value. To be specific, a smaller included angle indicates a higher similarity between features and a stronger correlation between weak fingerprint data.

In an example, ε is set to 0.2 based on a cosine distance (cosine value), and MinPts is set to 3. A cosine distance value between weak fingerprint data is determined. To be specific, if a cosine distance between fingerprint data is less than or equal to a specified threshold and a minimum quantity of points MinPts in an involved cluster is greater than 3, this part of fingerprint data with a short cosine distance may be clustered into a cluster. It should be noted that, an initial value, that is, 0.2, of the cosine distance is an empirical value.

An embodiment of this application further provides another manner of determining the suspected coverage vulnerability in step S202: determining the suspected coverage vulnerability based on the weak fingerprint data and a problematic AP, where the problematic AP is an AP with signal strength lower than a threshold among APs that are associated with terminals and that are obtained through a cloud. A manner of determining the problematic AP is as follows: The cloud detects network experience statuses of the terminals, and obtains the weak fingerprint data and the problematic AP based on the network experience statuses. The problematic AP is a corresponding AP, with poor signal strength, to which the terminal is connected, that is, an AP with signal strength lower than the threshold among the APs. The suspected coverage vulnerability is determined based on the weak fingerprint data and the problematic AP. In short, after the suspected coverage vulnerability is determined, a corresponding AP that is currently connected is known. This prepares for subsequently determining whether the suspected coverage vulnerability is a wireless network vulnerability.

S203: For each suspected coverage vulnerability, determine whether the suspected coverage vulnerability meets a filter-out condition; and if the suspected coverage vulnerability meets the filter-out condition, determine that the suspected coverage vulnerability is not a wireless network coverage vulnerability.

When the suspected coverage vulnerability is determined, judgment is performed on the suspected vulnerability, and judgment is mainly performed based on the filter-out condition. If the suspected coverage vulnerability meets the filter-out condition, it is determined that the suspected coverage vulnerability is not a wireless network coverage vulnerability. The filter-out condition is used for further filtering based on two aspects: a time dimension and a space dimension. First, whether the suspected coverage vulnerability is a tidal phenomenon is determined in the time dimension. Second, whether an AP corresponding to the suspected coverage vulnerability is an edge AP is determined in the space dimension. If the suspected coverage vulnerability is a tidal phenomenon, to be specific, acquisition times corresponding to the suspected coverage vulnerability in at least two acquisition cycles belong to one time range, and/or if the AP corresponding to the suspected coverage vulnerability is an edge AP, that is, when the filter-out condition is determined based on the foregoing two factors, the suspected coverage vulnerability obtained in this case is a wireless network coverage vulnerability. This effectively improves accuracy of coverage vulnerability processing.

In an example, a suspected coverage vulnerability M exists, and acquisition times are 12 o'clock and 13 o'clock. In this case, both the 12 o'clock and 13 o'clock belong to a time range of 11 o'clock to 13 o'clock, that is, belong to one time range. Therefore, it can be determined that the suspected coverage vulnerability M meets one of the factors of the filter-out condition.

In addition to the foregoing descriptions in which misjudgment is considered in the time dimension and the space dimension, a quantity of terminals further needs to be considered, to effectively avoid misjudgment that occurs when a terminal encounters a problem, that is, misjudgment due to the terminal's own reason instead of a network reason. Therefore, on this basis, whether the quantity of terminals meets a threshold further needs to be learned. If the threshold is met, it is finally determined that the suspected coverage vulnerability is a wireless network coverage vulnerability. The threshold is set to an empirical value.

In an example, it is assumed that suspected coverage vulnerabilities A, B, and C exist. Judgment is performed on the suspected coverage vulnerabilities A, B, and C, and it is found that the suspected coverage vulnerabilities A and B do not include a suspected coverage vulnerability that keeps appearing and do not belong to an edge AP. In this case, the suspected coverage vulnerabilities A and B are wireless network coverage vulnerabilities.

There are various implementations of determining whether the suspected coverage vulnerability meets the filter-out condition. A first implementation is provided below: After the suspected coverage vulnerability is determined, whether the suspected coverage vulnerability is a tidal phenomenon is determined. If yes, the filter-out condition is met, and no other condition needs to be judged. To be specific, the following does not need to be performed: determining suspected coverage vulnerabilities corresponding to different times based on weak fingerprint data, acquired at different times, of terminals within a coverage area of each AP; and if a difference between acquisition times corresponding to any suspected coverage vulnerability in at least two acquisition cycles is less than a preset time difference threshold, the suspected coverage vulnerability meets the filter-out condition.

The preset time difference threshold is set based on an actual empirical value. To be specific, a vulnerability appearing within the preset time difference threshold is a suspected vulnerability caused by a tidal phenomenon. In an embodiment, the preset time difference threshold is usually defined in hours, or certainly, other units may be set. This is not uniquely limited herein. For example, if a difference between at least two acquisition times corresponding to a first coverage vulnerability is greater than the preset time difference threshold, the first coverage vulnerability is not a tidal phenomenon. The tidal phenomenon is a suspected coverage vulnerability obtained through subsequent calculation on weak fingerprint data that appears due to a low network speed caused by an increase in a demand of a user to use a wireless network, for example, during the morning peak hours. In other words, the weak fingerprint data includes temporal characteristics. Therefore, temporal distribution of the weak fingerprint data may be known, to determine whether the coverage vulnerability is caused by a tidal phenomenon.

In an example, a preset time period is set to one week, a acquisition cycle is one day, and time of one day is set to 0 o'clock to 24 o'clock. It is assumed that the preset time difference threshold is set to 1h. If acquisition times of a suspected coverage vulnerability are two acquisition times, that is, 8 o'clock on Monday and 8 o'clock on Tuesday, a difference between the two acquisition times is as follows: 8 - 8 = 0, which is less than the preset time difference threshold. In this case, it is determined that the suspected coverage vulnerability is a tidal phenomenon. To be specific, the suspected coverage vulnerability meets the filter-out condition, but the suspected coverage vulnerability in this case is not a wireless network coverage vulnerability. Similarly, if two acquisition times of the suspected coverage vulnerability are 9 o'clock on Monday and 12 o'clock on Tuesday, a difference between the two acquisition times is as follows: 12 - 9 = 3, which is greater than the preset time difference threshold. In this case, the suspected coverage vulnerability is not a tidal phenomenon. To be specific, the suspected coverage vulnerability in this case is a wireless network coverage vulnerability. If two acquisition times of the suspected coverage vulnerability are 11 o'clock on Monday and 12 o'clock on Tuesday, a difference between the two acquisition times is as follows: 12 - 11 = 1, which is equal to the preset time difference threshold. The suspected coverage vulnerability is not a tidal phenomenon, and does not meet the filter-out condition for the suspected coverage vulnerability.

It should be noted that, in the foregoing examples, two acquisition times of the suspected coverage vulnerability are used only as an example, and three or more acquisition times may alternatively be selected to reduce an error. Examples are not provided one by one herein.

In an embodiment, that the difference between the at least two acquisition times corresponding to the first coverage vulnerability is equal to the preset time difference threshold is used as a single filter-out condition for single-aspect judgment. Alternatively, whether an AP corresponding to a suspected coverage vulnerability is an edge AP may be determined alone. A second implementation is provided below: If it is determined that an AP corresponding to a suspected coverage vulnerability is an edge AP, the suspected coverage vulnerability meets the filter-out condition. When whether an AP corresponding to a suspected coverage vulnerability is an edge AP is used as the only filter-out condition for judgment, after a suspected coverage vulnerability is determined, whether an AP corresponding to the suspected coverage vulnerability is an edge AP is determined, and if the AP corresponding to the suspected coverage vulnerability is an edge AP, the filter-out condition is met, and no other condition may be further judged.

That is, it is to determine whether an AP corresponding to a coverage vulnerability is an edge AP. The corresponding AP is a suspected coverage vulnerability determined based on weak fingerprint data, or is a suspected coverage vulnerability determined based on weak fingerprint data and a problematic AP. The manner of determining the problematic AP, refers to the foregoing descriptions in this application.

In other words, after a suspected coverage vulnerability is obtained, whether an AP corresponding to the suspected coverage vulnerability is an edge AP is determined, and if yes, the filter-out condition is met. There are also various manners of determining an edge AP. One implementation is used below as an example: determining node features of APs, where a node feature of any AP is used to indicate a wireless network status of the AP; determining an inter-node feature between the APs, where the inter-node feature is used to indicate a correlation between AP nodes based on terminal roaming data; constructing AP graph structure data based on the node features of the APs and the inter-node feature between the APs; and determining an edge AP among the APs based on the AP graph structure data.

The roaming data is data related to roaming of the terminal between different APs in the wireless network. Whether any AP is an edge AP is determined based on a node feature of the AP and the inter-node feature between the APs. Both the node features of the APs and the inter-node feature between the APs are considered. This effectively ensures accuracy of the correlation. In an embodiment, a wireless network status of each AP, namely, a node feature of the AP, is first determined. The node feature of the AP includes AP mutual-scan data, or roaming data and go-online/offline data of terminals within a coverage area of the AP. After the node feature of the AP is determined, a correlation between APs based on terminal roaming data, namely, an inter-node feature of the AP, is determined. The inter-node feature of the AP is a quantity of times of inter-node terminal roaming and/or a terminal roaming direction. After the node feature of the AP and the inter-node feature of the AP are determined, AP graph structure data is constructed, and an edge AP among the APs is determined based on the AP graph structure data. The node feature of the AP is not fixedly limited, and may be the data in the foregoing embodiment or other data.

FIG. 5 is a schematic diagram of an AP graph structure according to an embodiment of this application. FIG. 5 shows five APs in a wireless network, and an edge feature between an AP and another AP, namely, roaming data. A larger edge feature indicates more frequent roaming between two APs and a closer relationship between the APs. Based on FIG. 5, a node feature of an AP includes AP mutual-scan data. The AP mutual-scan data is signal strength data of APs that is scanned by each other and that is divided into a 5G frequency band (5G_rssi) and a 2.4G frequency band (2.4G_rssi), and further includes a quantity of times that an AP is scanned (Scanned_times). In addition to the AP mutual-scan data, roaming data is further involved, that is, signal strength of a terminal roaming into the AP (Roam_in_rssi) and signal strength of the terminal roaming out of the AP (Roam_out_rssi); and go-online/offline data is further involved, that is, a quantity of times that the AP serves as the first AP associated with the terminal (First Online_count), a quantity of times that the AP serves as the last AP associated with the terminal (Last Offline_count), and a quantity of terminals associated with the AP (Sta_count).

In the foregoing descriptions of determining the edge AP among the APs based on the constructed AP graph structure data, the edge AP is mainly obtained based on a graph structure model and a classification model. In an embodiment, the AP graph structure data is first input to the graph structure model to obtain node feature vectors of the APs, and then the node feature vectors of the APs are input to the classification model to obtain the edge AP among the APs. An output of the classification model is a two-dimensional vector (X, Y), where X represents a probability that the node belongs to a first type, and Y represents a probability that the node belongs to a second type. A larger option is selected to determine a type of the node, in other words, to obtain the edge AP among the APs.

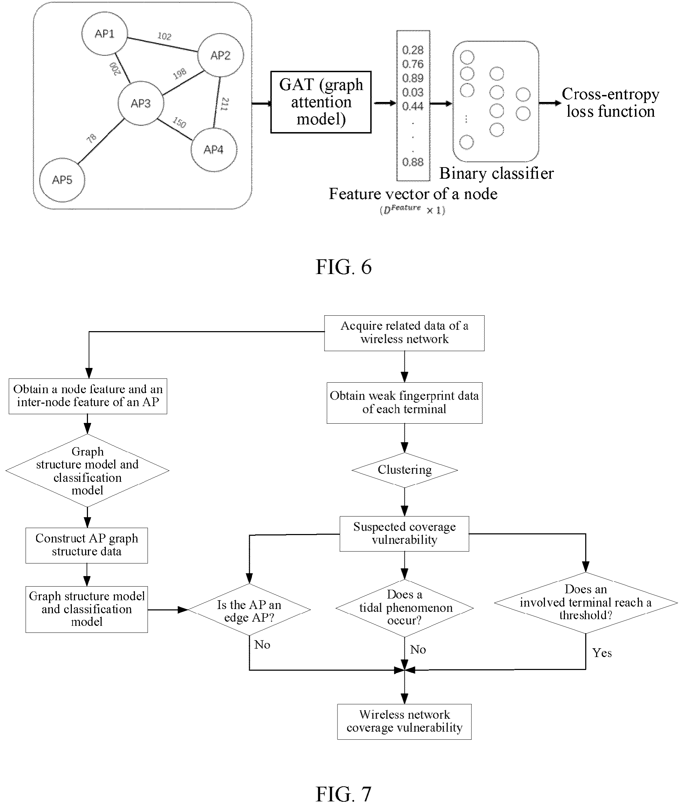

In an example, FIG. 6 is a schematic diagram of determining an edge AP among APs according to an embodiment of this application. AP graph structure data is input to a graph structure model (for example, a graph attention model), and calculation and output are performed in the graph attention model, where node feature vectors of the APs are output. The node feature vectors of the APs are input to a classification model to obtain a cross-entropy loss function, and a parameter of the classification model is trained based on the cross-entropy loss function, where a final output is (X, Y). X is preset to represent an edge AP, and Y is preset to represent a non-edge AP. Assuming that X is 0.6 and Y is 0.4, X > Y. In this case, a final output is X, that is, the AP is an edge AP.

It should be noted that the graph structure model may be different types of models, and the classification model may also be different types of models. In this embodiment of this application, a binary classifier is used as an example for description. In this embodiment of this application, the graph attention model is used as an example, and another model may alternatively be used, for example, a tree graph structure model or a multi-view graph structure model may be used. This is not specifically limited herein.

There are also various processing principles in a model. A principle of the graph attention model is still used below as an example. For any AP in AP graph structure data, an attention coefficient between the AP and an adjacent AP is determined based on an inter-node feature between the AP and the adjacent AP, a node feature of the AP, and a node feature of the adjacent AP. A fusion node feature of the AP is determined based on an attention coefficient between adjacent APs. An edge AP among APs is determined based on fusion node features of the APs.

The AP graph structure data includes the inter-node feature between the AP and the adjacent AP, the node feature of the AP, and the node feature of the adjacent AP. These three aspects of features are used to jointly determine the attention coefficient between the AP and the adjacent AP. The attention coefficient can well represent a relationship between nodes. After the attention coefficient is obtained, the fusion node feature of the AP is determined based on the attention coefficient between the adjacent APs, in other words, the node feature of the AP is updated to obtain the fusion node feature of the AP. The edge AP among the APs is determined based on the fusion node features of the APs.

In an example, it is assumed that an AP1, an AP2, and an AP3 exist. During calculation of a fusion node feature of the AP1, an attention coefficient 1 and an attention coefficient 2 of the AP1 and the AP2 are first obtained based on an inter-node feature between the AP1 and the AP2, an inter-node feature between the AP1 and the AP3, a node feature of the AP1, a node feature of the AP2, and a node feature of the AP3; a fusion node feature m of the AP1 is determined based on the attention coefficient 1 and the attention coefficient 2; and whether the AP1 is an edge AP is determined based on the fusion node feature m.

In the foregoing first embodiment, whether the acquisition times corresponding to the first coverage vulnerability in the at least two acquisition cycles belong to one time range is used as a single filter-out condition for single-aspect judgment. In a second implementation, whether an AP corresponding to a suspected coverage vulnerability is an edge AP is determined. When both judgments are considered, in the first embodiment, when the acquisition times corresponding to the first coverage vulnerability in the at least two acquisition cycles do not belong to one time range, that is, the suspected coverage vulnerability does not conform to a tidal phenomenon, judgment further needs to be performed based on the second judgment condition. To be specific, whether the AP corresponding to the suspected coverage vulnerability is an edge AP is determined, and if the AP corresponding to the suspected coverage vulnerability is not an edge AP, the filter-out condition is not met. If the corresponding acquisition times in the at least two acquisition cycles belong to one time range, the filter-out condition is met, and whether the suspected coverage vulnerability is an edge AP may alternatively be further determined, to increase accuracy of the judgment. To be specific, if the suspected coverage vulnerability neither conforms to a tidal phenomenon nor belongs to an edge AP, the suspected coverage vulnerability is a wireless coverage vulnerability. In this way, the determining is more accurate.

It should be noted that, after a suspected coverage vulnerability is determined, whether corresponding acquisition times in at least two acquisition cycles belong to one time range and whether the suspected coverage vulnerability belongs to an edge AP may be simultaneously determined. Alternatively, whether corresponding acquisition times in at least two acquisition cycles belong to one time range may be first determined, and then whether the suspected coverage vulnerability belongs to an edge AP is determined. Alternatively, whether the suspected coverage vulnerability belongs to an edge AP may be first determined, and then whether acquisition times corresponding to the suspected coverage vulnerability in at least two acquisition cycles belong to one time range is determined. A sequence thereof is not uniquely limited.

FIG. 7 is a schematic diagram of an overall process of determining a coverage vulnerability according to an embodiment of this application. A first implementation in this application is as follows:

A cloud periodically acquires related data of a wireless network; obtains, based on the related data, weak fingerprint data, acquired by each wireless access point AP, of terminals within a coverage area; clusters the weak fingerprint data to obtain a suspected coverage vulnerability; determines whether the suspected coverage vulnerability meets a filter-out condition; and if the suspected coverage vulnerability meets the filter-out condition, determines that the suspected coverage vulnerability is not a wireless network coverage vulnerability. To be specific, whether a tidal phenomenon occurs is determined. This corresponds to an implementation of determining whether corresponding acquisition times in at least two acquisition cycles belong to one time range. If yes, the suspected coverage vulnerability is a tidal phenomenon, and whether the AP is an edge AP is further determined. If yes, a quantity of terminals in this case is obtained, and whether the quantity of terminals reaches a threshold is determined. If the threshold is reached, it is determined that the suspected coverage vulnerability is not a wireless network coverage vulnerability. That is, misjudgment caused by the tidal phenomenon and misjudgment caused by the edge AP are eliminated. For the judgment on the quantity of terminals, when a vulnerability still exists after the tidal phenomenon and the edge AP are eliminated, whether a plurality of terminals under one AP are all subject to a suspected coverage vulnerability needs to be considered. In this case, a wireless network coverage vulnerability exists. This avoids misjudgment. For the judgment on the edge AP, AP graph structure data constructed based on a node feature and an inter-node feature of an AP is input to a graph structure model and a classification model to obtain a type of the AP, that is, whether the AP is an edge AP.

This application further provides another implementation as follows: A cloud periodically acquires related data of a wireless network; obtains, based on the related data, weak fingerprint data, acquired by each wireless access point AP, of terminals within a coverage area; determines whether an AP to which each terminal is connected is a problematic AP; if it is determined that the AP to which each terminal is connected is a problematic AP, obtains a suspected coverage vulnerability based on both the problematic AP and the weak fingerprint data, where the problematic AP is an AP whose AP signal strength is lower than a signal threshold and that is obtained by the cloud based on a network usage status of each terminal after the cloud obtains the network usage status; determines whether the suspected coverage vulnerability meets a filter-out condition; and if the suspected coverage vulnerability meets the filter-out condition, determines that the suspected coverage vulnerability is not a wireless network coverage vulnerability. To be specific, whether a tidal phenomenon occurs is determined. This corresponds to an implementation of determining whether corresponding acquisition times in at least two acquisition cycles belong to one time range. If yes, the suspected coverage vulnerability is a tidal phenomenon, and whether the AP is an edge AP is further determined. If yes, a quantity of terminals in this case is obtained, and whether the quantity of terminals reaches a threshold is determined. If the threshold is reached, it is determined that the suspected coverage vulnerability is not a wireless network coverage vulnerability. That is, misjudgment caused by the tidal phenomenon and misjudgment caused by the edge AP are eliminated. For the judgment on the quantity of terminals, when a vulnerability still exists after the tidal phenomenon and the edge AP are eliminated, whether a plurality of terminals under one AP are all subject to a suspected coverage vulnerability needs to be considered. In this case, a wireless network coverage vulnerability exists. This avoids misjudgment. For the judgment on the edge AP, AP graph structure data constructed based on a node feature and an inter-node feature of an AP is input to a graph structure model and a classification model to obtain a type of the AP, that is, whether the AP is an edge AP.

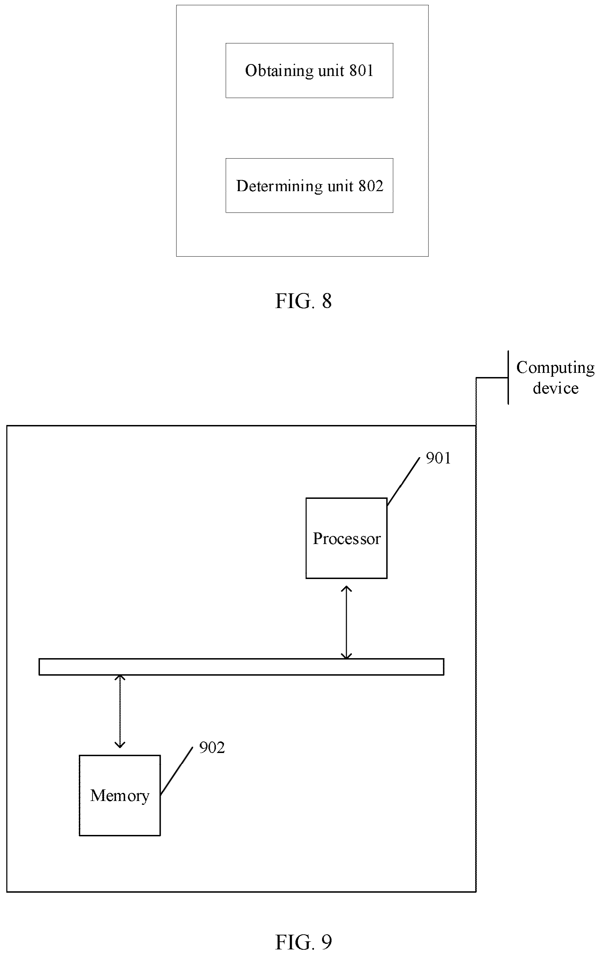

Based on the same technical concept, an embodiment of this application provides a wireless network coverage vulnerability processing apparatus. As shown in FIG. 8, the apparatus includes:
an obtaining unit 801, configured to obtain weak fingerprint data, acquired by each wireless access point AP, of terminals within a coverage area, where weak fingerprint data of any terminal is signal data of each AP that is acquired by the terminal in the case of a weak signal; and
a determining unit 802, configured to determine a suspected coverage vulnerability based on the weak fingerprint data of terminals, where
the determining unit 802 is further configured to: for each suspected coverage vulnerability, determine whether the suspected coverage vulnerability meets a filter-out condition, and if the suspected coverage vulnerability meets the filter-out condition, determine that the suspected coverage vulnerability is not an implementation of a wireless network coverage vulnerability.

In an optional implementation, the obtaining unit 801 is further configured to: obtain weak fingerprint data, acquired by each wireless access point AP, of terminals within a coverage area, where weak fingerprint data of any terminal is signal data of each AP that is acquired by the terminal in the case of a weak signal; and determine a suspected coverage vulnerability based on the weak fingerprint data of terminals and a problematic AP, where the problematic AP is an AP with signal strength lower than a threshold among APs that are associated with terminals and that are obtained based on a cloud; and
the determining unit 802 is further configured to: for each suspected coverage vulnerability, determine whether the suspected coverage vulnerability meets a filter-out condition, and if the suspected coverage vulnerability meets the filter-out condition, determine that the suspected coverage vulnerability is not a wireless network coverage vulnerability.

In an optional implementation, the filter-out condition includes: acquisition times corresponding to a first coverage vulnerability in at least two acquisition cycles belong to one time range, and/or an AP corresponding to the first coverage vulnerability is an edge AP.

In an optional implementation, the determining unit 802 is configured to determine suspected coverage vulnerabilities corresponding to different times based on weak fingerprint data, acquired at different times, of terminals within a coverage area of each AP; and
the determining unit 802 is configured to: if a difference between acquisition times corresponding to any suspected coverage vulnerability in at least two acquisition cycles is less than a preset time difference threshold, the suspected coverage vulnerability meets the filter-out condition.

In an optional implementation, the determining unit 802 is further configured to: if it is determined that an AP corresponding to the suspected coverage vulnerability is an edge AP, the suspected coverage vulnerability meets the filter-out condition.

In an optional implementation, the determining unit 802 is further configured to: if acquisition times corresponding to the suspected coverage vulnerability in at least two acquisition cycles do not belong to one time range, determine whether the AP corresponding to the suspected coverage vulnerability is an edge AP; and if the AP corresponding to the suspected coverage vulnerability is an edge AP, determine that the suspected coverage vulnerability meets the filter-out condition;
or
if the AP corresponding to the suspected coverage vulnerability is not an edge AP, determine whether acquisition times corresponding to the suspected coverage vulnerability in at least two acquisition cycles belong to one time range; and if the acquisition times corresponding to the suspected coverage vulnerability in the at least two acquisition cycles belong to one time range, determine that the suspected coverage vulnerability meets the filter-out condition.

In an optional implementation, the determining unit 802 is configured to determine node features of the AP corresponding to the suspected coverage vulnerability and another AP, where a node feature of any AP is used to indicate a wireless network status of the AP;
the determining unit 802 is further configured to determine an inter-node feature between the AP corresponding to the suspected coverage vulnerability and the another AP, where the inter-node feature is used to indicate a correlation between AP nodes based on terminal roaming data; and
the determining unit 802 is further configured to determine, based on the inter-node feature and the node features of the AP corresponding to the suspected coverage vulnerability and the another AP, that the AP corresponding to the suspected coverage vulnerability is an edge AP.

In an optional implementation, the determining unit 802 is configured to construct AP graph structure data based on the inter-node feature and a node feature of the AP corresponding to the suspected coverage vulnerability; and
the determining unit 802 is configured to determine, based on the AP graph structure data, that the AP corresponding to the suspected coverage vulnerability is an edge AP.

In an optional implementation, the determining unit 802 is configured to determine an attention coefficient between the AP corresponding to the suspected coverage vulnerability and the another AP based on the inter-node feature between the node feature of the AP corresponding to the suspected coverage vulnerability and the another AP, the node feature of the AP corresponding to the suspected coverage vulnerability, and a node feature of the another AP, and determine a fusion node feature of the AP corresponding to the suspected coverage vulnerability based on an attention coefficient between adjacent APs; and
the determining unit 802 is configured to determine, based on the fusion node feature, that the AP corresponding to the suspected coverage vulnerability is an edge AP.

In an optional implementation, the determining unit 802 is further configured to input the AP graph structure data to a graph structure model, to obtain node feature vectors of APs; and
the determining unit 802 is further configured to input the node feature vectors of the APs to a classification model, to obtain an edge AP among the APs.

In an optional implementation, the node feature includes AP mutual-scan data, or roaming data and go-online/offline data of terminals within the coverage area of the AP; and
the inter-node feature is a quantity of times of inter-node terminal roaming and/or a terminal roaming direction.

In an optional implementation, the determining unit 802 is configured to cluster the weak fingerprint data of terminals based on a density parameter, to obtain first clusters and first outliers, where the first outliers are weak fingerprint data that does not belong to any first cluster;
the determining unit 802 is configured to cluster the first clusters and the first outliers based on an adjusted density parameter, to obtain second clusters and second outliers, until a clustering stop condition is met; and
the determining unit 802 is configured to determine, as a suspected coverage vulnerability, each cluster obtained when the clustering stop condition is met, where the density parameter includes a cluster region size and a minimum quantity of points in the cluster, and clustering is performed based on a cosine distance between the weak fingerprint data.

In an optional implementation, the determining unit 802 is configured to determine the clustering stop condition based on comparison between outliers in at least two clustering results; and if quantities of outliers are equal, the clustering stop condition is met; or otherwise, continue to perform clustering.

In an optional implementation, the determining unit 802 is further configured to determine whether a quantity of terminals meets a threshold; and if the threshold is met, finally determine that the suspected coverage vulnerability is a wireless network coverage vulnerability.

Based on the same technical concept, an embodiment of this application further provides a computing device. As shown in FIG. 9, the computing device includes at least one processor 901 and a memory 902 connected to the at least one processor. A connection medium between the processor 901 and the memory 902 is not limited in this embodiment of the application. For example, in FIG. 9, the processor 901 and the memory 902 are connected through a bus. The bus may be an address bus, a data bus, a control bus, or the like.

In this embodiment of this application, the memory 902 stores instructions that can be executed by the at least one processor 901, and the at least one processor 901 may perform, by executing the instructions stored in the memory 902, the steps included in the wireless network coverage vulnerability processing method.

The processor 901 is a control center of the computing device, and may be connected to all components of the computing device through various interfaces and lines, and run or execute the instructions stored in the memory 902 and invoke data stored in the memory 902, to implement data processing. Optionally, the processor 901 may include one or more processing units. An application processor and a modem processor may be integrated into the processor 901. The application processor mainly processes an operating system, a user interface, an application, and the like. The modem processor mainly processes delivered instructions. It can be understood that the modem processor may alternatively not be integrated in the processor 901. In some embodiments, the processor 901 and the memory 902 may be implemented on a same chip. In some embodiments, the processor 901 and the memory 902 may alternatively be implemented separately on separate chips.

The processor 901 may be a general-purpose processor such as a central processing unit (CPU), a digital signal processor, an application-specific integrated circuit (ASIC), a field programmable gate array or another programmable logic device, a discrete gate or transistor logic device, or a discrete hardware component, which may implement or perform the methods, steps, or logic block diagrams disclosed in the embodiments of this application. The general-purpose processor may be a microprocessor or any conventional processor or the like. Steps of the methods disclosed with reference to the embodiments of the wireless network coverage vulnerability processing method may be directly performed and completed by using a hardware processor, or may be performed and completed by using a combination of a hardware module and a software module in the processor.

As a non-volatile computer-readable storage medium, the memory 902 may be configured to store non-volatile software programs, non-volatile computer-executable programs, and modules. The memory 902 may include at least one type of storage medium, for example, may include a flash memory, a hard disk, a multimedia card, a memory card, a random access memory (RAM), a static random access memory (SRAM), a programmable read-only memory (PROM), a read-only memory (ROM), an electrically erasable programmable read-only memory (EEPROM), a magnetic memory, a magnetic disk, an optical disc, or the like. The memory 902 is, but not limited to, any other medium that can be used to carry or store desired program code in a form of an instruction or a data structure and can be accessed by a computer. The memory 902 in the embodiments of this application may alternatively be a circuit or any other apparatus that can implement a storage function, and is configured to store program instructions and/or data.

Based on the same technical concept, an embodiment of this application further provides a computer-readable storage medium. The computer-readable storage medium stores a computer program that can be executed by a computing device. When the program is run on the computing device, the computing device is enabled to perform the steps of the wireless network coverage vulnerability processing method.

A person skilled in the art should understand that the embodiments of this application may be provided as a method, a system, or a computer program product. Therefore, this application may be implemented in a form of a hardware-only embodiment, a software-only embodiment, or an embodiment with a combination of software and hardware. In addition, this application may be implemented in a form of a computer program product that is implemented on one or more computer-usable storage media (including but not limited to a disk memory, a CD-ROM, an optical memory, and the like) that include computer-usable program code.

This application is described with reference to the flowcharts and/or the block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of another programmable data processing device to generate a machine, so that the instructions executed by the computer or the processor of the other programmable data processing device generate an apparatus for implementing a specific function in one or more procedures in the flowcharts and/or in one or more blocks in the block diagrams.

These computer program instructions may alternatively be stored in a computer-readable memory that can instruct a computer or another programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

Alternatively, these computer program instructions may be loaded onto a computer or another programmable data processing device, so that a series of operations and steps are performed on the computer or the another programmable device, to generate computer-implemented processing. Therefore, the instructions executed on the computer or the other programmable device provide steps for implementing a specific function in one or more procedures in the flowcharts and/or in one or more blocks in the block diagrams.

Clearly, a person skilled in the art can make various changes and variations to this application without departing from the spirit and scope of this application. Therefore, this application is also intended to cover the changes and variations provided that the changes and variations of this application fall within the scope of the claims of this application or equivalent technologies thereof.

## Claims

1. A wireless network coverage vulnerability processing method, comprising:
obtaining weak fingerprint data, acquired by a wireless access point AP within a preset time period, of a terminal within a coverage area, wherein the weak fingerprint data of the terminal is signal data of the AP that is acquired by the terminal in the case of a weak signal;
determining a suspected coverage vulnerability based on the weak fingerprint data of the terminal;
determining, based on the suspected coverage vulnerability, whether the suspected coverage vulnerability meets a filter-out condition; and
when the suspected coverage vulnerability meets the filter-out condition, determining that the suspected coverage vulnerability is not a wireless network coverage vulnerability.

2. The method according to claim 1, wherein before the obtaining weak fingerprint data, acquired by a wireless access point AP within a preset time period, of a terminal within a coverage area, the method further comprises:
when uplink signal strength of a first terminal is less than a preset threshold, triggering a first AP to acquire weak fingerprint data of the first terminal, wherein the first AP is a device in a network accessed by the first terminal.

3. The method according to claim 1, wherein the filter-out condition is used to indicate, in a time dimension and/or a space dimension, that the suspected coverage vulnerability is not a wireless network coverage vulnerability.

4. The method according to claim 1, wherein the filter-out condition comprises: acquisition times corresponding to a first coverage vulnerability in at least two acquisition cycles belong to one time range, and/or an AP corresponding to the first coverage vulnerability is an edge AP, wherein the first coverage vulnerability is a suspected coverage vulnerability.

5. The method according to any one of claims 1 to 4, wherein the determining whether the suspected coverage vulnerability meets a filter-out condition comprises:
determining suspected coverage vulnerabilities corresponding to different times based on weak fingerprint data, acquired at different times, of the terminal within the coverage area of the AP; and
when a difference between the acquisition times corresponding to a suspected coverage vulnerability in at least two acquisition cycles is less than a preset time difference threshold, determining that the suspected coverage vulnerability meets the filter-out condition.

6. The method according to any one of claims 1 to 4, wherein the determining whether the suspected coverage vulnerability meets a filter-out condition comprises:
when it is determined that a first AP corresponding to the suspected coverage vulnerability is an edge AP, determining that the suspected coverage vulnerability meets the filter-out condition.

7. The method according to any one of claims 1 to 4, wherein the determining whether the suspected coverage vulnerability meets a filter-out condition comprises:
when acquisition times corresponding to the suspected coverage vulnerability in at least two acquisition cycles do not belong to one time range, determining whether the first AP corresponding to the suspected coverage vulnerability is an edge AP; and when the first AP is an edge AP, determining that the suspected coverage vulnerability meets the filter-out condition;
or
when the first AP is not an edge AP, determining whether acquisition times corresponding to the suspected coverage vulnerability in at least two acquisition cycles belong to one time range; and when the acquisition times corresponding to the suspected coverage vulnerability in the at least two acquisition cycles belong to the one time range, determining that the suspected coverage vulnerability meets the filter-out condition.

8. The method according to any one of claims 1 to 7, wherein the determining whether an AP corresponding to the suspected coverage vulnerability meets a filter-out condition comprises:
determining respective node features of a first AP and a second AP corresponding to the suspected coverage vulnerability, wherein a node feature of an AP is used to indicate a wireless network status of the AP, and the second AP comprises at least one AP other than the first AP;
determining an inter-node feature between the first AP and the second AP, wherein the inter-node feature is used to indicate a correlation between AP nodes based on terminal roaming data; and
determining, based on the inter-node feature and the respective node features of the first AP and the second AP, that the first AP is an edge AP.

9. The method according to claim 8, wherein the determining, based on the inter-node feature and the respective node features of the first AP and the second AP, that the first AP is an edge AP comprises:
constructing AP graph structure data based on the inter-node feature and the respective node features of the first AP and the second AP; and
determining, based on the AP graph structure data, that the first AP is an edge AP.

10. The method according to claim 9, wherein the determining, based on the AP graph structure data, that the AP corresponding to the suspected coverage vulnerability is an edge AP comprises:
inputting the AP graph structure data to a graph structure model, to obtain a node feature vector of the AP; and
inputting the node feature vector of the AP to a classification model, to determine that the first AP is an edge AP.

11. The method according to claim 8, wherein the determining, based on the inter-node feature and a node feature of the first AP, that the AP corresponding to the suspected coverage vulnerability is an edge AP comprises:
determining an attention coefficient between the first AP and the second AP based on the inter-node feature between the first AP and the second AP, the node feature of the first AP, and the node feature of the second AP, and determining a fusion node feature of the first AP based on the attention coefficient between adjacent APs; and
determining, based on the fusion node feature, that the first AP is an edge AP.

12. The method according to claim 8, wherein the node feature comprises one or more of AP mutual-scan data, or roaming data and go-online/offline data of the terminal within the coverage area of the AP; and
the inter-node feature comprises a quantity of times of inter-node terminal roaming and/or a terminal roaming direction.

13. The method according to any one of claims 1 to 12, wherein when the coverage area of the AP covers a plurality of terminals, determining a suspected coverage vulnerability based on weak fingerprint data of the plurality of terminals comprises:
clustering the weak fingerprint data of the plurality of terminals based on a density parameter, to obtain one or more first clusters and at least one first outlier, wherein the first outlier is weak fingerprint data that does not belong to any first cluster;
clustering the plurality of first clusters and the first outliers based on an adjusted density parameter, to obtain one or more second clusters and at least one second outlier, until a clustering stop condition is met, wherein the second outlier is weak fingerprint data that does not belong to any second cluster; and
determining, as the suspected coverage vulnerability, clusters obtained when the clustering stop condition is met, wherein the density parameter comprises a cluster region size and a minimum quantity of points in the cluster, clustering is performed based on a cosine distance between the weak fingerprint data, and the adjusted density parameter is a cluster region size and a minimum quantity of points in the cluster that are redefined based on the plurality of first clusters and the plurality of first outliers.

14. The method according to claim 13, wherein the clustering stop condition comprises determining based on comparison between outliers in at least two clustering results; and when the outliers in the two clustering results are the same, and the outliers do not change, the clustering stop condition is met.

15. The method according to claim 1, wherein after the determining that the suspected coverage vulnerability meets the filter-out condition, the method further comprises: determining whether a quantity of terminals meets a threshold; and when the threshold is met, finally determining that the suspected coverage vulnerability is the wireless network coverage vulnerability.

16. The method according to claim 1, wherein after the determining whether the suspected coverage vulnerability meets a filter-out condition, the method further comprises:
when the suspected coverage vulnerability does not meet the filter-out condition, determining that the suspected coverage vulnerability is the wireless network coverage vulnerability.

17. A wireless network coverage vulnerability recognition apparatus, comprising:
an obtaining unit, configured to obtain weak fingerprint data, acquired by each wireless access point AP within a preset time period, of each terminal within a coverage area, wherein weak fingerprint data of any terminal is signal data of each AP that is acquired by the terminal in the case of a weak signal; and
a determining unit, configured to determine a suspected coverage vulnerability based on the weak fingerprint data of each terminal, wherein
the determining unit is further configured to: for each suspected coverage vulnerability, determine whether the suspected coverage vulnerability meets a filter-out condition; and if the suspected coverage vulnerability meets the filter-out condition, determine that the suspected coverage vulnerability is not a wireless network coverage vulnerability.

18. A computing device, comprising:
a memory, configured to store program instructions; and
a processor, configured to invoke the program instructions stored in the memory, and perform, based on an obtained program, the method according to any one of claims 1 to 16.

19. A computer-readable storage medium, wherein the computer-readable storage medium stores a computer program, and when the computer program is run, the method according to any one of claims 1 to 16 is performed.
